Europäisches Patentamt

European Patent Office

Office européen des brevets

(19)

(11) Publication number: **0 193 677**
A2

(12) **EUROPEAN PATENT APPLICATION**

(21) Application number: 85308590.0

(51) Int. Cl.⁴: **B 01 D 53/14**, B 01 D 53/18

(22) Date of filing: 26.11.85

(30) Priority: 14.12.84 GB 8431597

(43) Date of publication of application: 10.09.86
Bulletin 86/37

(84) Designated Contracting States: **BE DE FR GB IT NL SE**

(71) Applicant: IMPERIAL CHEMICAL INDUSTRIES PLC,
Imperial Chemical House Millbank, London SW1P 3JF
(GB)

(72) Inventor: Langley, Philip Edward, Temple House, Carlton
in Cleveland Cleveland (GB)

(74) Representative: Locke, Timothy John et al, Imperial
Chemical Industries PLC Legal Department: Patents
Bessemer Road PO Box 6, Welwyn Garden City
Hertfordshire, AL7 1HD (GB)

(54) **Treatment of gas mixtures.**

(57) $CO_2$ is separated from a gas which contains $CO_2$ by
dividing the gas into at least two parts and feeding at least
two of the said parts into at least two $CO_2$ absorption zones
through which a liquid absorbent for $CO_2$ is flowed in series
countercurrently to the gas, recovering the gas from the
said zones after reduction of its $CO_2$ concentration, recover-
ing liquid absorbent from the last zone and recycling it
directly or indirectly to the first absorption zone after re-
moval of $CO_2$ from it.

## TREATMENT OF GAS MIXTURES

This invention relates to the treatment of gas mixtures.

It is known, for example from British patent specification 725,000 to remove carbon dioxide from a gas mixture containing it by scrubbing it in an absorption zone at superatmospheric pressure with an aqueous alkaline solution capable of absorbing carbon dioxide, for example a potassium carbonate solution (which forms potassium bicarbonate in the process), and regenerating the solution for reuse. This was done by by passing the solution to a regeneration zone maintained at a lower pressure in which carbon dioxide flashed off and was removed, and boiling or stream stripping the solution to remove further $CO_2$.

Treatment of this type may be carried out on process streams produced in oxidation processes, for example the oxidation of ethylene to ethylene oxide, in which part of the reactant is oxidised to carbon dioxide and in which it is desired to recycle unconverted reactants to the process. Suitably the desired product is first removed from the mixture produced by the reaction, and at least part of the remaining mixture is treated to remove carbon dioxide before recycling the remainder to the reaction. By this means a build-up of carbon dioxide in the reaction is prevented.

Because of the cost of carbon dioxide removal it has been the practice in some processes to treat only a small proportion of the mixture to remove an amount of carbon dioxide equal to that produced in each pass of the reactants through a reactor which is operated at a high inlet level of $CO_2$. If carbon dioxide is inert in the reaction this procedure is very satisfactory since any given absorber has a limited gas throughput rate and in general the higher the $CO_2$ content of the gas the greater the effectiveness of the absorber in removing it. By this procedure therefore the treatment costs are reduced but the reaction is carried out at relatively high levels of $CO_2$.

It is however not always the case that $CO_2$ is inert. A compromise must then be reached between the costs of reducing the $CO_2$ concentration and the costs of any detrimental effect of the $CO_2$ in the process.

This may present a problem if for example an existing oxidation process plant is uprated by increasing the pass conversion for example by the use of a more active catalyst, and the $CO_2$ removal process has to be debottlenecked in consequence in order to maintain a similar concentration of $CO_2$ in the recycle stream whilst removing more $CO_2$ in total.

Alternatively there may be a need for an improved process of removing $CO_2$ in which the concentration of $CO_2$ is reduced in such reactions without substantially increasing the cost of $CO_2$ recovery.

It would of course be possible simply to treat a larger proportion of the gas and to increase the size of the absorber accordingly. However, this procedure is plainly expensive. An alternative which enables the plant to operate at lower $CO_2$ levels without requiring an increase in absorber capacity would clearly be advantageous. If this could be combined with a procedure which left the liquid flows and composition of the absorbent before and after the absorbent step(s) unchanged the regeneration apparatus and procedures could remain unchanged and the modification of existing plant would be simplified.

This invention comprises a process of separating $CO_2$ from a gas which comprises $CO_2$ by dividing the gas into at least two parts and feeding at least two of the said parts into at least two $CO_2$ absorption zones through which a liquid absorbent for $CO_2$ is flowed in series countercurrently to the gas, recovering the gas from the said zones after reduction of its $CO_2$ concentration, recovering liquid absorbent from the last of the absorption zones through which it is passed, removing $CO_2$ from itand recycling it directly or indirectly to the first absorption zone.

If the invention is used as a means of increasing the amount of $CO_2$ removed from a process whilst maintaining similar $CO_2$ levels in a recycled gas stream, the $CO_2$ removal stage must of course remove more $CO_2$. As this stage is normally overdesigned and carried out at moderate pressures this is unlikely to represent a major problem in many cases, typically involving merely passing more steam through it to remove greater quantities of $CO_2$.

Suitably the gas is divided into three to five parts all of which are treated as aforesaid in three to five absorption zones as aforesaid.

The absorption zones can operate at similar pressures and can readily be accomodated within a single pressure vessel which can be divided for this purpose. This is particularly valuable when a modification of existing plant which comprises such a vessel is comtemplated. If desired, the zones may be accomodated in different pressure vessels however.

The absorption zones may comprise plates, but suitably comprise random packing which may be of known type for example Raschig rings, Pall rings or Berl saddles or ordered packing, for example Sulzer foil packing.

Suitably substantially the whole of the gas comprising $CO_2$ is split into a sufficient number of parts to enable each of them to be treated in a corresponding absorption zone. The quantity of gas which can be treated in each zone is determined by the volume of solution flowing through it the type of packing and particularly the cross sectional area available for the countercurrent flow of gas and liquid. If an existing plant in which for example one n th part of the gas stream has been treated in a single countercurrent absorption zone is to be converted, the existing absorption zone may be divided into n zones one n th part of the gas being treated in each zone, as the countercurrent flow of both gas and liquid will then be at the same rate across each cross section of each new zone as it was across the cross sections of the original absorption zone. If the quantity of $CO_2$ absorbed by the absorbent is the same before and after the conversion the composition of the absorbent fed to the absorbent zones and recovered from them can be the same as before and thus the regeneration procedure can remain the same.

Suitably the absorption stage is carried out at a similar temperature to that of the regeneration stage in order to avoid the need for heating and cooling between the stages. The regeneration stage is suitably carried out at about atmospheric pressure or slightly above in order to allow the maximum pressure difference between the regeneration and absorption stages without the need to operate the regeneration zone at a reduced pressure, thus producing the appropriate difference in $CO_2$ content of the absorbent between the inlet and outlets of the absorption zones. The temperature is suitably below but near the boiling point of the absorbent under the pressure in the regeneration stage in order to permit effective absorption of $CO_2$ without undue losses of components of the absorbent by evaporation. If the absorbent is an aqueous solution a temperature in the absorption stages is suitably 80-120 and preferably 90-110°C.

The temperature in the regeneration stage is suitably 90 to 130°C and preferably 100-120°C at pressures of for example 1 to 2 bars absolute, losses of water from either stage being regarded as tolerable and readily made up.

Pressures in the absorption zones are preferably as high as possible, but very suitably if possible match the pressures used in the process from which the gas to be treated originates in order to avoid the need to compress and decompress the gas between the $CO_2$ removal stage and the process. In treating gases derived from a process for the production of ethylene oxide by oxidising ethylene with molecular oxygen over a heterogeneous catalyst, the pressure in the absorber is suitably 10 to 30, for example 10 to 20 bars absolute. For effective operation of the $CO_2$ removal stage the pressure difference between the absorption zones and the regeneration stage should be at least five bars.

The absorbent may be one of the many known in the art and is suitably a solution of potassium carbonate/bicarbonate in water, optionally with additives. In this case the molar ratio of $CO_2$ content to $K_2O$ content at the inlet is suitably 1.1 to 1.2 and at the outlet 1.2 to 1.9 and preferably 1.2 to 1.5. The difference between these values is preferably 0.1 to 0.7. The use of absorbents which comprise volatile components may be undesirable if their vapours would be passed back to a process which would be unfavourably affected.

One form of the invention will now be described with reference to the accompanying drawings of which figures 1 and 2 show schematic representations of a process respectively before and after conversion to conform to the invention, figure 3 shows a cross section through an absorber for use in the invention and figure 4 shows a view of a liquid distributor for use in the absorber.

An ethylene oxide plant (1) which converts a stream comprising ethylene and oxygen in the presence of ballast gas (mainly methane) and a chlorine containing inhibitor to ethylene oxide by contacting it with a catalyst comprising silver on a support by partial oxidation of the ethylene, and recovers ethylene oxide from the product, leaves a gas stream containing ethylene, oxygen, ballast gases and $CO_2$ produced by total oxidation of part of the ethylene.

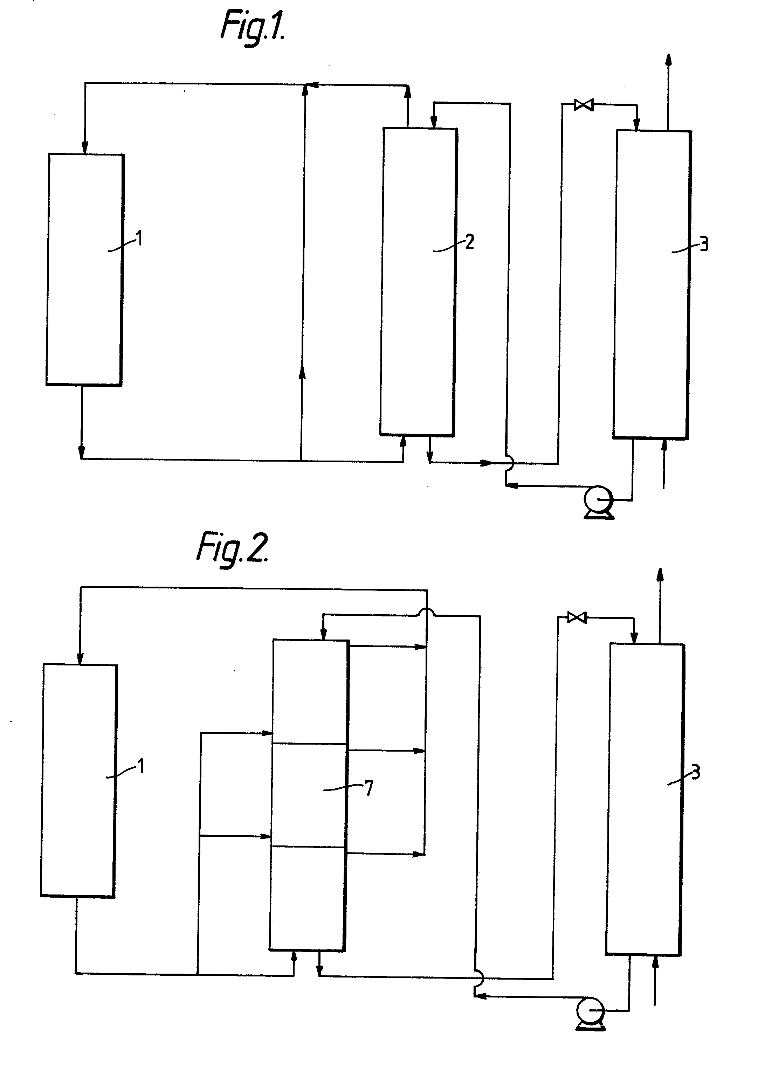

In figure 1, one third of this gas stream is passed countercurrently in a packed absorber (the packing being pall rings) (2) to a flow of a solution containing 30% $K_2CO_3$ in water which contains a 15% stoichiometric excess of $CO_2$, (i.e. molar ratio of $CO_2$ to $K_2O$ = 1.15) at a pressure of 15 bars absolute and at a temperature of 110°C.

The solution emerging from the absorber contains a 29% stoichiometric excess of $CO_2$ and is passed to a regeneration zone (3) in which the pressure was reduced to 1 bar absolute and the temperature maintained at 110°C and steam blown through. The stoichiometric excess of $CO_2$ in the solution is thereby reduced to 15% and it is fed back to the absorber (2).

The $CO_2$ content of the gas mixture passing through the absorber is reduced from 2.7% to 0.3%, and the gas returned to the reaction by admixture of this with the unprocessed gas has a $CO_2$ content of 1.9%.

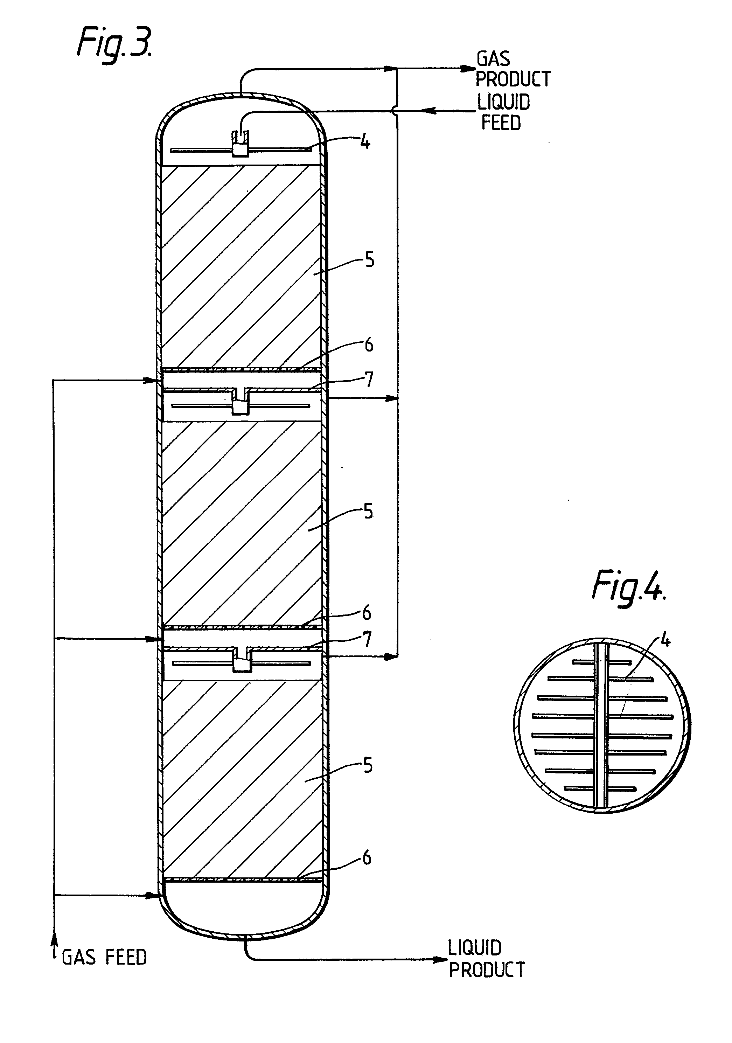

In the converted plant shown in fig 2, the absorber (2) is divided into 3 zones as shown in fig 3. Liquid distributors (4) shown in figure 4 spray liquid from side arms over the top of each bed of packing (comprising pall rings) (5) at the bottom of which is a support grid (6), and under the top two beds, a partition (7) to separate gas streams which also collects absorbent liquid and feeds the relevant liquid distributors. Pipework is arranged to feed the zones as shown with gas and liquid.

Each one third part of the gas mixture from plant (1) is fed to a different zone of modified absorber (8). Because of the

0193677

greater effectiveness of the modified unit, the gas fed to the plant has a lower $CO_2$ level and at the same selectivity and conversion the same net production of $CO_2$ occurs on each pass. Thus the mixed gas from which $CO_2$ is to be recovered has a content of only 1.7% $CO_2$. This is split into three parts and each part treated in a different zone of the absorber. Because of the increasing $CO_2$ content of the absorbent as it passes through successive zones the treated streams from the zones have different $CO_2$ contents, respectively 0.6%, 0.91% and 1.18% $CO_2$, and these are mixed giving a content for the combined mixed gases recycled to the reactor of 0.9% $CO_2$. The pressure and temperature in the absorption zones remain the same, and as the same quantity of $CO_2$ is removed the composition of the absorbent fed to and recovered from the absorption zones is also the same. The regeneration zone is thus unchanged in structure and operation.

The pressure drop across each zone of the absorber is about one third of the previous drop across the whole absorber. Thus although three times the quantity of gas must be driven through, the total power is similar.

It will be seen from the above that with little change in running costs the ethylene oxide reaction can be carried out at an average $CO_2$ level which is reduced by 1% compared with the same plant before conversion.

## Claims

1. A process of separating $CO_2$ from a gas which comprises $CO_2$ by dividing the gas into at least two parts and feeding at least two of the said parts into at least two $CO_2$ absorption zones through which a liquid absorbent for $CO_2$ is flowed in series countercurrently to the gas, recovering the gas from the said zones after reduction of its $CO_2$ concentration, recovering liquid absorbent from the last of the absorption zones through which it is passed, removing $CO_2$ from it and recycling it directly or indirectly to the first absorption zone.

2. A process as claimed in claim 1 in which the absorption zones operate at similar pressures and are accommodated within a single pressure vessel.

3. A process according to claim 1 or 2 in which the gas comprising $CO_2$ is split into three to five parts all of which are treated in three to five absorption zones.

4. A process as claimed in any preceding claim in which the absorption and removal of $CO_2$ from the liquid absorbent is carried out at a similar temperature.

5. A process as claimed in claim 4 in which the absorption of $CO_2$ takes place at an elevated pressure and in which removal of $CO_2$ from the liquid absorbent takes place at or slightly above atmospheric pressure.

6. An oxidation process in which part of a reactant is oxidised to $CO_2$ and in which unconverted reactants are recycled to the oxidation stage after removal of product, in which after the said removal of product at least part of a remaining gas mixture is treated to remove $CO_2$ by a process as claimed in any preceding claim before recycling the remainder to the oxidation stage.

7. A process as claimed in claim 6 in which the process comprises oxidising ethylene to ethylene oxide.

8. A pressure vessel for carrying out a process as claimed in any preceding claim which comprises at least two gas/liquid contact zones which are adapted to be operated at similar pressures, means for flowing a stream of liquid absorbent for $CO_2$ downwardly through each of the zones in series and means for flowing separate streams of gas containing $CO_2$ upwardly through each of the zones.

0193677

*Fig.1.*

*Fig.2.*

0193677

Fig.3.

GAS
PRODUCT

LIQUID
FEED

4

5

6

7

5

6

7

5

6

GAS FEED

LIQUID
PRODUCT

Fig.4.

4